# EUROPEAN PATENT SPECIFICATION

(11) **EP 3 627 078 B1**
(45) Date of publication and mention of the grant of the patent: **31.03.2021**
(21) Application number: 18215899.8
(22) Date of filing: 26.12.2018
(51) Int. Cl.: F25B 49/02, F25D 29/00, F25D 21/04, F25B 47/00

(54) **AN OPERATING METHOD FOR COOLING DEVICES**
BETRIEBSVERFAHREN FÜR KÜHLVORRICHTUNGEN
PROCÉDÉ DE FONCTIONNEMENT POUR DISPOSITIFS DE REFROIDISSEMENT

(30) Priority: 19.09.2018 TR 201813424
(43) Date of publication of application: 25.03.2020
(73) Proprietor: Vestel Beyaz Esya Sanayi ve Ticaret A.S., 45030 Manisa (TR)
(72) Inventor: DEVECI, Can Deniz, 45030 Manisa (TR); KAYIKCI, Murat, 45030 Manisa (TR)
(74) Representative: Cayli, Hülya

(56) References cited:
- WO-A1-2012/112057
- WO-A1-2017/161027
- US-A- 5 711 159

## Description

### Related Technical Field

The present invention relates to operating methods which are suitable for use in especially no-frost cooling devices and which make the compressor within the cooling device start to operate at a low voltage during an energizing process which is conducted after the cooling device is lack of energy for a certain period of time.

### Prior Art

Cooling devices which enable to store products below a certain temperature comprise at least one cooling cycle assembly in order to achieve desired temperature ranges. The cooling cycle assembly generally comprises a compressor, a condenser, a capillary tube and an evaporator, and provides to keep at least one compartment comprised within the cooling device at desired temperature range. Moreover, according to the cooling cycle performed by said assembly, a coolant from the compressor which has a high temperature and pressure passes through the condenser so as to decrease its temperature to get condensed, and the pressure thereof is decreased while passing through the capillary tube; the coolant arriving at the evaporator at a low temperature and pressure is evaporated by the heat of said compartment, thus enabling cooling of the compartment by drawing heat from the compartment during said evaporation process; following cooling of the compartment, the coolant from the evaporator returns to the compressor and the cooling cycle is completed by this way.

The cooling devices generally include a default algorithm regarding the cooling cycle to be performed after the cooling device is energized, wherein the compressor and all the other components, which are involved in the cooling process (e.g. the cooling cycle assembly, fan, flap, defrosting assembly etc.) after the compressor is energized, are operated according to said default algorithm. An example of such a cooling device is disclosed in the published prior art document no US5711159A. In this document, an energy-efficient refrigerator comprising a refrigerator control system for generating refrigerator control signals responsive to cooling demands of respective refrigerator compartments is explained. The refrigeration control system is coupled to sensors, such as compartment temperature sensors, ambient condition sensors, and compartment access door sensors, so as to determine the cooling demands of respective refrigerator compartments, and generates control signals for the refrigeration apparatus, including, for example, compressor motor speed, evaporator and condenser fan operation, and other control functions. Another example of a refrigeration controller is given in the published document no. WO2012/112057A1. The controller of this document controls the temperature in the cabinet and so that it approaches the maximum allowable temperature by using the most efficient fan speed for loading and time of day. On the other hand, the fan spped is varied by customer presence to reduce the noise created by such machines while still creating sufficient cooling to remain within the maximum temperature while providing acceptable power economy.

In another prior art document no. WO2017/161027A1 a system and a method of controlling a variable-capacity compressor and a variable-capacity fan using a two stage thermostat is disclosed. The system of this document comprises a compressor, an indoor fan, a thermostat, an indoor fan controller, and a compressor controller. The thermostat provides first and second signals based on indoor loading. The fan controller operates the fan in low speed mode and the compressor controller operates the compressor in low capacity mode when only the first signal is asserted. The compressor controller automatically switches the compressor to high capacity mode if only the first signal remains asserted past the low capacity mode runtime. The fan controller operates the fan in high speed mode when the second signal is asserted while the first signal is still asserted. The compressor controller continues to operate the compressor in high capacity mode and the fan controller operates the fan in low speed mode after the second signal is de-asserted, until the first signal is de-asserted, at which point the fan and compressor are turned off.

Moreover, the above-mentioned prior art documents US5711159A, WO2017/161027A1 and WO2012/112057 A1 each disclose an operating method according to the preamble of claim 1.

However, when the cooling device is first energized or when it is energized after lacking of energy for a certain period of time (e.g. following a power cut), the compressor requires high levels of voltage for the initial operation. This situation both leads increase in energy consumption of the cooling device, and affects operating performance of the compressor in a negative way (e.g. the compressor operates at a higher volume), which then reduces the user comfort. Therefore, during an energizing process to be conducted after the cooling device is lack of energy for a certain period of time, it is important to keep the initial operation of the compressor at a certain value or at a voltage lower than this value; and said value has been assigned 187V for the conventional applications. Within this context, keeping initial operation of the compressor at a value of 187V or less comforts the customer while enabling to keep energy consumption of the cooling device at optimal levels.

### Brief Description of Invention

An operating method, as set out in independent claim 1, is provided according to the invention, the operating method being suitable for use in a cooling device which comprises at least one compartment; at least one cooling cycle assembly comprising at least one compressor and at least one evaporator, and cooling said compartment; at least one fan which increases the heat exchange between the evaporator and the compartment and increases the air circulation within the compartment, when operated; at least a first temperature sensor to measure temperature of said compartment; at least a second temperature sensor to measure temperature of an outer environment in which the cooling device is present; and at least one control unit which is connected with the compressor, the fan, the first temperature sensor and the second temperature sensor, and which comprises a default operating algorithm in which the operating/non-operating conditions of the compressor and the fan are defined for the cooling cycle to be performed in the cooling device depending on the measured temperature values, the method comprising the steps of;
- transmitting energy to the compressor upon energizing the cooling device;
- measuring a temperature of the compartment by a first period and transmitting it to the control unit by the first temperature sensor upon energizing the cooling device;
- measuring a temperature of the outer environment by a second period, which is the same as the first period or different from the first period, and transmitting it to the control unit by the second temperature sensor upon energizing the cooling device;
- comparing, by the control unit, the measured temperature of the compartment with a first value, and the measured temperature of the outer environment with a second value different from the first value;
- operating the cooling device according to said default operating algorithm if the compartment temperature is below the first value or the outer environment temperature is below the second value, as a result of the comparison conducted;
- comparing the outer environment temperature with a third value, which is above the second value, if the outer environment temperature equals to or is above the second value, as a result of the comparison conducted;
- controlling the operating condition of the compressor if the outer environment temperature is below or equals to the third value and the compartment temperature equals to or is above the first value;
   - repeating the steps of comparing the outer environment temperature and compartment temperature if the compressor is not operating;
   - controlling the time elapsed beginning from the operation of compressor if the compressor is operating;
      ∘ not operating the fan and repeating the steps of comparing the outer environment temperature and compartment temperature with said values provided at the control unit, if the operating period of the compressor equals to or is below a first period;
      ∘ controlling the operating condition of the fan, if the operating period of the compressor is above the first period but equals to or is below a second period having a value which is above the first period;
         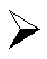 controlling stopping period of the fan if the fan is not operating;
            ❖ keeping the fan in a non-operating state and repeating the steps of comparing the outer environment temperature and compartment temperature with said values provided at the control unit, if the stopping period of the fan equals to or is below a third period;
            ❖ operating the fan and repeating the steps of comparing the outer environment temperature and compartment temperature with said values provided at the control unit, if the stopping period of the fan is above the third period;
         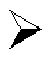 controlling the operating period of the fan if the fan is operating;
            ❖ keeping the fan in an operating state and repeating the steps of comparing the outer environment temperature and compartment temperature with said values provided at the control unit, if the operating period of the fan equals to or is below the third period;
            ❖ stopping the fan and repeating the steps of comparing the outer environment temperature and compartment temperature with said values provided at the control unit, if the operating period of the fan is above the third period;
      ∘ operating the cooling device according to said default operating algorithm if the operating period of the compressor is above the second period;
- controlling the operating state of the compressor if the outer environment temperature is above the third value and the compartment temperature equals to or is above the first value;
   - repeating the steps of comparing the outer environment temperature and the compartment temperature if the compressor is not working;
   - controlling the time elapsed beginning from the operation of compressor if the compressor is operating;
      ∘ not operating the fan and repeating the steps of comparing the outer environment temperature and compartment temperature with said values provided at the control unit, if the time elapsed beginning from the operation of compressor equals to or is below the second period;
      ∘ controlling the operating condition of the fan, if the time elapsed beginning from the operation of compressor is above the second period but equals to or is below a fourth period;
         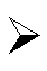 controlling stopping period of the fan if the fan is not operating;
            ❖ keeping the fan in a non-operating state and repeating the steps of comparing the outer environment temperature and compartment temperature with said values provided at the control unit, if the stopping period of the fan equals to or is below a third period;
            ❖ operating the fan and repeating the steps of comparing the outer environment temperature with said values provided at the control unit, if the stopping period of the fan is above the third period;
         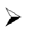 controlling the operating period of the fan if the fan is operating;
            ❖ keeping the fan in an operating state and repeating the steps of comparing the outer environment temperature and compartment temperature with said values provided at the control unit, if the operating period of the fan equals to or is below the third period;
            ❖ stopping the fan and repeating the steps of comparing the outer environment temperature and compartment temperature with said values provided at the control unit, if the operating period of the fan is above the third period;
      ∘ repeating the steps of comparing the outer environment temperature and compartment temperature with said values provided at the control unit, if the time elapsed beginning from the operation of compressor is above the fourth period.

With the operating method according to the invention, it is enabled to make the compressor within the cooling device start to operate at a low voltage during an energizing process which is conducted after the cooling device is lack of energy for a certain period of time. This eliminates the need for additional components such as a power relay, and decreases the manufacturing cost of the cooling device; and keeps the energy consumption of the cooling device at optimum values, so that user comfort is effectively allowed.

### Object of Invention

An object of the present invention is to provide an operating method which is suitable for use in cooling devices and which make the compressor within the cooling device start to operate at a low voltage during an energizing process which is conducted after the cooling device is lack of energy for a certain period of time.

Another object of the present invention is to provide an operating method which makes the compressor start to operate at a voltage value of 187V or less, after lacking of energy for a certain period of time.

Yet another object of the present invention is to provide an operating method which keeps the energy consumption of the cooling device at determined optimum values.

A further object of the present invention is to provide an operating method to achieve the user comfort.

### Description of Invention

The compressor within the cooling device forms an important part of an energy consumption of the cooling device. For the cooling devices which are energized after lacking of energy for a certain period of time (e.g. an initial energizing process or an initial energizing process following a power cut), the compressor requires high levels of voltage during initial operation in order to operate at a low current. However, when the compressor starts to operate at a low voltage as 187V, it is detected e.g. by the OLP/PTC (over load protector/positive thermal cut-out) that unsafe conditions occur (this unsafe conditions are such conditions that result from over-heating of the main and auxiliary windings of the compressor) as a result of drawing a high current, and the compressor stops in a short period, which then both increases the energy consumption of the cooling device and reduces the user comfort. In order to eliminate said problem, according to the conventional applications, it is required that the voltage value of the first operation of the compressor is 187V or less; and according to the present invention, there is provided an operating method which is suitable for use in especially no-frost cooling devices and which makes the compressor start to operate at a voltage value of 187V or less.

The operating method according to the invention suitable for use in a cooling device which comprises at least one compartment; at least one cooling cycle assembly comprising at least one compressor and at least one evaporator, and cooling said compartment; at least one fan which increases the heat exchange between the evaporator and the compartment and increases the air circulation within the compartment, when operated; at least a first temperature sensor to measure temperature of said compartment; at least a second temperature sensor to measure temperature of an outer environment in which the cooling device is present; and at least one control unit which is connected with the compressor, the fan, the first temperature sensor and the second temperature sensor, and which comprises a default operating algorithm in which the operating/non-operating conditions of the compressor and the fan are defined for the cooling cycle to be performed in the cooling device depending on the measured temperature values, the method comprising the steps of;
- transmitting energy to the compressor upon energizing the cooling device (during this initial energizing process, the compressor may start to operate in order to cool the compartment or may not operate in case of a low voltage (e.g. 187V) or may operate and stop after a short period of time, e.g. depending on an algorithm stored at the control unit);
- measuring a temperature of the compartment by a first period (e.g. instantaneously) and transmitting it to the control unit by the first temperature sensor upon energizing the cooling device;
- measuring a temperature of the outer environment by a second period (e.g. instantaneously), which is the same as the first period or different from the first period, and transmitting it to the control unit by the second temperature sensor upon energizing the cooling device;
- comparing, by the control unit, the measured temperature of the compartment with a first value (preferably 5°C), and the measured temperature of the outer environment with a second value (preferably 32°C) different from the first value;
- operating the cooling device (and accordingly, the compressor and the fan) according to said default operating algorithm if the compartment temperature is below the first value or the outer environment temperature is below the second value, as a result of the comparison conducted;
- comparing the outer environment temperature with a third value (preferably 38°C), which is above the second value, if the outer environment temperature equals to or is above the second value, as a result of the comparison conducted;
- controlling the operating condition of the compressor if the outer environment temperature is below or equals to the third value and the compartment temperature equals to or is above the first value;
   - repeating the steps of comparing the outer environment temperature and compartment temperature if the compressor is not operating;
   - controlling the time elapsed beginning from the operation of compressor if the compressor is operating;
      ∘ not operating the fan and repeating the steps of comparing the outer environment temperature and compartment temperature with said values provided at the control unit, if the operating period of the compressor equals to or is below a first period (preferably 20 minutes);
      ∘ controlling the operating condition of the fan, if the operating period of the compressor is above the first period but equals to or is below a second period (preferably 40 minutes) having a value which is above the first period;
         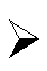 controlling stopping period of the fan if the fan is not operating;
            ❖ keeping the fan in a non-operating state and repeating the steps of comparing the outer environment temperature and compartment temperature with said values provided at the control unit, if the stopping period of the fan equals to or is below a third period (preferably 5 minutes);
            ❖ operating the fan and repeating the steps of comparing the outer environment temperature and compartment temperature with said values provided at the control unit, if the stopping period of the fan is above the third period;
         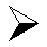 controlling the operating period of the fan if the fan is operating;
            ❖ keeping the fan in an operating state and repeating the steps of comparing the outer environment temperature and compartment temperature with said values provided at the control unit, if the operating period of the fan equals to or is below the third period;
            ❖ stopping the fan and repeating the steps of comparing the outer environment temperature and compartment temperature with said values provided at the control unit, if the operating period of the fan is above the third period;
      ∘ operating the cooling device (and accordingly the compressor and the fan) according to said default operating algorithm if the operating period of the compressor is above the second period;
- controlling the operating state of the compressor if the outer environment temperature is above the third value and the compartment temperature equals to or is above the first value;
   - repeating the steps of comparing the outer environment temperature and the compartment temperature if the compressor is not working;
   - controlling the time elapsed beginning from the operation of compressor if the compressor is operating;
      ∘ not operating the fan and repeating the steps of comparing the outer environment temperature and compartment temperature with said values provided at the control unit, if the time elapsed beginning from the operation of compressor equals to or is below the second period;
      ∘ controlling the operating condition of the fan, if the time elapsed beginning from the initial operation of compressor is above the second period but equals to or is below a fourth period (preferably 80 minutes);
         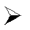 controlling stopping period of the fan if the fan is not operating;
            ❖ keeping the fan in a non-operating state and repeating the steps of comparing the outer environment temperature and compartment temperature with said values provided at the control unit, if the stopping period of the fan equals to or is below a third period (preferably 5 minutes);
            ❖ operating the fan and repeating the steps of comparing the outer environment temperature with said values provided at the control unit, if the stopping period of the fan is above the third period;
         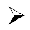 controlling the operating period of the fan if the fan is operating;
            ❖ keeping the fan in an operating state and repeating the steps of comparing the outer environment temperature and compartment temperature with said values provided at the control unit, if the operating period of the fan equals to or is below the third period;
            ❖ stopping the fan and repeating the steps of comparing the outer environment temperature and compartment temperature with said values provided at the control unit, if the operating period of the fan is above the third period;
      ∘ repeating the steps of comparing the outer environment temperature and compartment temperature with said values provided at the control unit, if the time elapsed beginning from the operation of compressor is above the fourth period.

In an exemplary embodiment of the invention, when the cooling device is energized after lacking of energy for a certain period of time, the first temperature sensor starts to measure the temperature of the compartment, and the second sensor starts to measure the temperature of the environment in which the cooling device is present. Measured temperature values are transmitted to the control unit and compared with the first, second and third temperature values therein. In case the value measured by the first temperature sensor is below the first value or the value measured by the second temperature sensor is below the second value, the method steps according to the present invention are not applied, and instead of this, the cooling device is operated depending on the measured temperature values and with a default operating algorithm stored at the control unit. In case the value measured by the second temperature sensor is above the third value and the value measured by the first temperature sensor equals to or is above the first value, the fan is activated (starts to operate) after the compressor is operated for a second period, but the fan is not operated for the operating period of a second duration of the compressor. Following activation of the fan, it operates for the first time frame of a third duration and stops for a second time frame of a third duration that follows the first time frame, and by this way, operation of the fan is arranged such that it operates and stops in a loop for preferably the second period at the time frames of a third duration. In case the value measured by the second temperature sensor equals to or is below the third value, and the value measured by the first temperature sensor equals to or is above the first value; the fan is activated (starts to operate) after the compressor is operated for a first period, but the fan is not operated for the operating period of a first duration of the compressor. In case the value measured by the second temperature sensor equals to or is below the third value, and the value measured by the first temperature sensor equals to or is above the first value, the fan is activated (starts to operate) after the compressor is operated for a first period, but the fan is not operated for the operating period of a first duration of the compressor. Following activation of the fan, it operates for the first time frame of a third duration and stops for a second time frame of a third duration that follows the first time frame, and by this way, operation of the fan is arranged such that it operates and stops in a loop for preferably the first period at the time frames of a third duration. Such intermittent operating state of the fan is performed only when the compressor is in an operating state. Thanks to the operating method according to the present invention, especially in the cooling devices having no-frost feature, voltage value of the compressor at the start of operation is able to be decreased due to the fact that operation of the fan is delayed and that it is operated and stopped by periods of a third duration for a certain period of time after being operated, according to the operating period of the compressor depending on the temperature of the environment in which the device is present and on the temperature of the compartment comprised within the device. When the cooling device is energized, the compressor is energized as well, and the compressor may operate or may operate and stop as a result of this energizing process. If the compressor draws high current when it operates, it may stop in a short while upon detecting that it is under unsafe conditions. Within this context, with the operating method according to the invention, compressor is prevented from stopping due to unsafe conditions after it starts to work, so that the cooling process may be performed by the compressor by starting to operate at a low voltage value. Also, in order to prevent stopping of the compressor, operating condition of the fan is arranged relative to that of the compressor, which then eases the operating conditions of the compressor. Moreover, due to this algorithm developed, the compressor may start to operate at a value of 187V or less. By this way, both the energy consumption of the cooling device is kept at optimum values and user comfort is effectively allowed.

In the initial stage of the comparative tests conducted with regard to the operating method according to the invention, it was observed that, when two exemplary cooling devices not having the operating method of the invention are energized at an outer environment temperature of 43°C, compressors of each device start to operate at a voltage value above 187V (210V or more) and that they stop after operating for 13-18 minutes. In the next stage of the test, two exemplary cooling devices, which have a command in the operating algorithm such that the fan is activated after a first period following operation of the compressor, were energized at an outer environment temperature of 43°C, and it was observed that compressors of each device start to operate at a voltage value above 187V and that they stop after operating for 45-50 minutes. In another stage, two exemplary cooling devices, which have a command in the operating algorithm such that the fan is activated after a second period following operation of the compressor, were energized at an outer environment temperature of 43°C, and it was observed that compressor of one of the devices starts to operate at a value of 187V, and that the compressor of the other device starts to operate at a voltage value above 187V. In another test stage, an exemplary cooling device, which have a command in the operating algorithm such that the fan is activated after a first period following operation of the compressor and that the fan is operated in a loop in which it is operated with periods of third period for a first period after it is activated, was energized at an outer environment temperature of 43°C, and it was observed that a voltage value of compressor of the device during an initial operation is decreased to 200V. Yet in another test stage, when a cooling device not having the operating method of the invention is energized at an outer environment temperature of 32°C, it was observed that compressor of the device also starts to operate at a value of 187V; however, when the device is energized at an outer environment temperature of 38°C, the compressor of the device cannot start to operate at a value of 187V. According to these observations, a cooling device, which have a command in the operating algorithm such that the fan is activated after a second period following operation of the compressor and that the fan is operated in a way that it is operated and stopped in short periods (such as 2 minutes or 5 minutes) for a certain time period after it is activated, was energized at an outer environment temperature of 43°C; and it was observed that optimal level is achieved in terms of operation starting voltage values of the compressor especially in the application where the fan is operated-stopped in an intermittent manner of 5 minutes. The operating method for which the steps are provided above is achieved with the tests and observations conducted, and in this method, the first value is preferably 5°C, the second value is preferably 32°C, the third value is preferably 38°C, the first period is preferably 20 minutes, the second period is preferably 40 minutes, the third period is preferably 5 minutes and the fourth period is preferably 80 minutes.

In a preferred embodiment of the invention, before the step of comparing the outer environment temperature and the compartment temperature with said values provided at the control unit or before the step of measuring the outer environment temperature and the compartment temperature so as to transmit them to the control unit, operating method according to the present invention comprises the steps of: comparing number of energizations of the cooling device with a certain value (preferably 4); operating the cooling device (and accordingly the compressor and the fan) according to said default operating algorithm if the number of energizations is below the certain value; if the number of energizations equals to or is above the certain value, proceeding to the steps of comparing the compartment temperature with said values provided at the control unit or the step of measuring the outer environment temperature and the compartment temperature so as to transmit them to the control unit. Thus, the operating method can be enabled at a final user stage, so that extended manufacturing process and accordingly the increase in the costs are able to be prevented which are caused by the tests to which the cooling device is subjected during a manufacturing process.

With the operating method according to the invention, it is enabled to make the compressor within the cooling device start to operate at a low voltage during an energizing process which is conducted after the cooling device is lack of energy for a certain period of time. This eliminates the need for additional components such as a power relay, and decreases the manufacturing cost of the cooling device; and keeps the energy consumption of the cooling device at optimum values, so that user comfort is effectively allowed.

## Claims

1. An operating method suitable for use in a cooling device which comprises at least one compartment; at least one cooling cycle assembly comprising at least one compressor and at least one evaporator, and cooling said compartment; at least one fan which increases the heat exchange between the evaporator and the compartment and increases the air circulation within the compartment, when operated; at least a first temperature sensor to measure temperature of said compartment; at least a second temperature sensor to measure temperature of an outer environment in which the cooling device is present; and at least one control unit which is connected with the compressor, the fan, the first temperature sensor and the second temperature sensor, and which comprises a default operating algorithm in which the operating/non-operating conditions of the compressor and the fan are defined for the cooling cycle to be performed in the cooling device depending on the measured temperature values, the operating method comprises the steps of;
• transmitting energy to the compressor upon energizing the cooling device;
• measuring a temperature of the compartment by a first period and transmitting it to the control unit by the first temperature sensor upon energizing the cooling device;
• measuring a temperature of the outer environment by a second period, which is the same as the first period or different from the first period, and transmitting it to the control unit by the second temperature sensor upon energizing the cooling device;
• comparing, by the control unit, the measured temperature of the compartment with a first value, and the measured temperature of the outer environment with a second value different from the first value;
• operating the cooling device according to said default operating algorithm if the compartment temperature is below the first value or the outer environment temperature is below the second value, as a result of the comparison conducted;
and **characterized by** comprising the steps of;
• comparing the outer environment temperature with a third value, which is above the second value, if the outer environment temperature equals to or is above the second value, as a result of the comparison conducted;
• controlling the operating condition of the compressor if the outer environment temperature is below or equals to the third value and the compartment temperature equals to or is above the first value;
- repeating the steps of comparing the outer environment temperature and compartment temperature if the compressor is not operating;
- controlling the time elapsed beginning from the operation of compressor if the compressor is operating;
∘ not operating the fan and repeating the steps of comparing the outer environment temperature and compartment temperature with said values provided at the control unit, if the operating period of the compressor equals to or is below a first period;
∘ controlling the operating condition of the fan, if the operating period of the compressor is above the first period but equals to or is below a second period having a value which is above the first period;
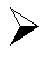 controlling stopping period of the fan if the fan is not operating;
❖ keeping the fan in a non-operating state and repeating the steps of comparing the outer environment temperature and compartment temperature with said values provided at the control unit, if the stopping period of the fan equals to or is below a third period;
❖ operating the fan and repeating the steps of comparing the outer environment temperature and compartment temperature with said values provided at the control unit, if the stopping period of the fan is above the third period;
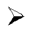 controlling the operating period of the fan if the fan is operating;
❖ keeping the fan in an operating state and repeating the steps of comparing the outer environment temperature and compartment temperature with said values provided at the control unit, if the operating period of the fan equals to or is below the third period;
❖ stopping the fan and repeating the steps of comparing the outer environment temperature and compartment temperature with said values provided at the control unit, if the operating period of the fan is above the third period;
∘ operating the cooling device according to said default operating algorithm if the operating period of the compressor is above the second period;
• controlling the operating state of the compressor if the outer environment temperature is above the third value and the compartment temperature equals to or is above the first value;
- repeating the steps of comparing the outer environment temperature and the compartment temperature if the compressor is not working;
- controlling the time elapsed beginning from the operation of compressor if the compressor is operating;
∘ not operating the fan and repeating the steps of comparing the outer environment temperature and compartment temperature with said values provided at the control unit, if the time elapsed beginning from the operation of compressor equals to or is below the second period;
∘ controlling the operating condition of the fan, if the time elapsed beginning from the operation of compressor is above the second period but equals to or is below a fourth period;
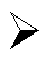 controlling stopping period of the fan if the fan is not operating;
❖ keeping the fan in a non-operating state and repeating the steps of comparing the outer environment temperature and compartment temperature with said values provided at the control unit, if the stopping period of the fan equals to or is below a third period;
❖ operating the fan and repeating the steps of comparing the outer environment temperature and the compartment temperature with said values provided at the control unit, if the stopping period of the fan is above the third period;
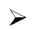 controlling the operating period of the fan if the fan is operating;
❖ keeping the fan in an operating state and repeating the steps of comparing the outer environment temperature and compartment temperature with said values provided at the control unit, if the operating period of the fan equals to or is below the third period;
❖ stopping the fan and repeating the steps of comparing the outer environment temperature and compartment temperature with said values provided at the control unit, if the operating period of the fan is above the third period;
∘ repeating the steps of comparing the outer environment temperature and compartment temperature with said values provided at the control unit, if the time elapsed beginning from the operation of compressor is above the fourth period.

2. An operating method according to claim 1, **characterized in that** the first value is 5°C.

3. An operating method according to claim 1, **characterized in that** the second value is 32°C.

4. An operating method according to claim 1, **characterized in that** the third value is 38°C.

5. An operating method according to claim 1, **characterized in that** the first period is 20 minutes.

6. An operating method according to claim 1, **characterized in that** the second period is 40 minutes.

7. An operating method according to claim 1, **characterized in that** the third period is 5 minutes.

8. An operating method according to claim 1, **characterized in that** the fourth period is 80 minutes.

9. An operating method according to claim 1, **characterized in that** before the step of comparing the outer environment temperature and the compartment temperature with said values provided at the control unit or before the step of measuring the outer environment temperature and the compartment temperature so as to transmit them to the control unit, the operating method comprises the steps of: comparing number of energizations of the cooling device with a certain value; operating the cooling device according to said default operating algorithm if the number of energizations is below the certain value; if the number of energizations equals to or is above the certain value, proceeding to the steps of comparing the compartment temperature with said values provided at the control unit or the step of measuring the outer environment temperature and the compartment temperature so as to transmit them to the control unit.

10. An operating method according to claim 9, **characterized in that** the value with which the number of energizations is compared is 4.

## Patentansprüche

1. Betriebsverfahren, das geeignet ist, um in einer Kühlvorrichtung angewendet zu werden, die mindestens ein Fach; mindestens eine Kühlkreislaufbaugruppe, die mindestens einen Kompressor und mindestens einen Verdampfer umfasst und das Fach kühlt; mindestens einen Lüfter, der bei Betrieb den Wärmeaustausch zwischen dem Verdampfer und dem Fach erhöht und die Luftzirkulation innerhalb des Fachs erhöht; mindestens einen ersten Temperatursensor, um die Temperatur des Fachs zu messen; mindestens einen zweiten Temperatursensor, um die Temperatur einer äußeren Umgebung, in der sich die Kühlvorrichtung befindet, zu messen; und mindestens eine Steuereinheit umfasst, die mit dem Kompressor, dem Lüfter, dem ersten Temperatursensor und dem zweiten Temperatursensor verbunden ist und die einen Standardbetriebsalgorithmus aufweist, in dem die Betriebs- / Nichtbetriebszustände des Kompressors und des Lüfters für den Kühlzyklus definiert sind, der in Abhängigkeit von den gemessenen Temperaturwerten in der Kühlvorrichtung auszuführen ist, wobei das Betriebsverfahren folgende Schritte umfasst
Übertragen von Energie an den Kompressor beim Einschalten der Kühlvorrichtung;
beim Einschalten der Kühlvorrichtung Messen einer Temperatur des Fachs mit dem ersten Temperatursensor über eine erste Zeitspanne und Übermitteln dieser an die Steuereinheit;
beim Einschalten der Kühlvorrichtung Messen einer Temperatur der äußeren Umgebung mit dem zweiten Temperatursensor über eine zweite Zeitspanne, die gleich der ersten Zeitspanne ist oder sich von der ersten Zeitspanne unterscheidet, und Übermitteln dieser an die Steuereinheit;
Vergleichen, durch die Steuereinheit, der gemessenen Temperatur des Fachs mit einem ersten Wert und der gemessenen Temperatur der äußeren Umgebung mit einem zweiten Wert, der sich von dem ersten Wert unterscheidet;
als Ergebnis des durchgeführten Vergleichs, Betreiben der Kühlvorrichtung gemäß dem Standardbetriebsalgorithmus, wenn die Temperatur des Fachs unter dem ersten Wert oder die Temperatur der äußeren Umgebung unter dem zweiten Wert liegt;
und **gekennzeichnet durch** die folgenden Schritte
als Ergebnis des durchgeführten Vergleichs, Vergleichen der Temperatur der äußeren Umgebung mit einem dritten Wert, der über dem zweiten Wert liegt, wenn die Temperatur der äußeren Umgebung gleich dem zweiten Wert ist oder über diesem liegt;
Steuern des Betriebszustands des Kompressors, wenn die Temperatur der äußeren Umgebung unter dem dritten Wert liegt oder gleich dem dritten Wert ist und die Temperatur des Fachs gleich dem ersten Wert ist oder über diesem liegt;
- Wiederholen der Schritte des Vergleichs der Temperatur der äußeren Umgebung und der Temperatur des Fachs, wenn der Kompressor nicht in Betrieb ist;
- Steuern der seit dem Beginn des Betriebs des Kompressors verstrichenen Zeit, wenn der Kompressor in Betrieb ist;
∘ Nichtbetreiben des Lüfters und Wiederholung der Schritte des Vergleichs der Temperatur der äußeren Umgebung und der Temperatur des Fachs mit den Werten, die die Steuereinheit liefert, wenn die Betriebszeit des Kompressors gleich einer ersten Zeitspanne ist oder darunter liegt;
∘ Steuern der Betriebszustands des Lüfters, wenn die Betriebszeit des Kompressors über der ersten Zeitspanne liegt, aber gleich einer zweiten Zeitspanne ist oder darunter liegt, die einen Wert aufweist, der über der ersten Zeitspanne liegt;
> Steuern der Haltezeitspanne des Lüfters, wenn der Lüfter nicht in Betrieb ist;
❖ Halten des Lüfters in einem Nichtbetriebszustand und Wiederholen der Schritte des Vergleichs der Temperatur der äußeren Umgebung und der Temperatur des Fachs mit den Werten, die die Steuereinheit liefert, wenn die Haltezeitspanne des Lüfters gleich einer dritten Zeitspanne ist oder darunter liegt;
❖ Betreiben des Lüfters und Wiederholen der Schritte des Vergleichs der Temperatur der äußeren Umgebung und der Temperatur des Fachs mit den Werten, die die Steuereinheit liefert, wenn die Haltezeitspanne des Lüfters über der dritten Zeitspanne liegt;
> Steuern der Betriebsdauer des Lüfters, wenn der Lüfter in Betrieb ist;
❖ Halten des Lüfters in einem Betriebszustand und Wiederholen der Schritte des Vergleichs der Temperatur der äußeren Umgebung und der Temperatur des Fachs mit den Werten, die die Steuereinheit liefert, wenn die Betriebsdauer des Lüfters gleich der dritten Zeitspanne ist oder unter dieser liegt;
❖ Anhalten des Lüfters und Wiederholen der Schritte des Vergleichs der Temperatur der äußeren Umgebung und der Temperatur des Fachs mit den Werten, die die Steuereinheit liefert, wenn die Betriebsdauer des Lüfters über der dritten Zeitspanne liegt;
∘ Betreiben der Kühlvorrichtung gemäß dem Standardbetriebsalgorithmus, wenn die Betriebsdauer des Kompressors über der zweiten Zeitspanne liegt;
Steuern des Betriebszustands des Kompressors, wenn die Temperatur der äußeren Umgebung über dem dritten Wert liegt und die Temperatur des Fachs gleich dem ersten Wert ist oder über diesem liegt;
- Wiederholen der Schritte des Vergleichs der Temperatur der äußeren Umgebung und der Temperatur des Fachs, wenn der Kompressor nicht in Betrieb ist;
- Steuern der seit dem Beginn des Betriebs des Kompressors verstrichene Zeit, wenn der Kompressor in Betrieb ist;
∘ Nichtbetreiben des Lüfters und Wiederholen der Schritte des Vergleichs der Temperatur der äußeren Umgebung und der Temperatur des Fachs mit den Werten, die die Steuereinheit liefert, wenn die Zeit, die seit dem Beginn des Betriebs des Kompressors verstrichen ist, gleich der zweiten Zeitspanne ist oder unter dieser liegt;
∘ Steuern des Betriebszustands des Lüfters, wenn die Zeit, die seit dem Betrieb des Kompressors verstrichen ist über der zweiten Zeitspanne liegt, aber gleich einer vierten Zeitspanne ist oder darunter liegt;
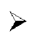 Steuern der Haltezeitspanne des Lüfters, wenn der Lüfter nicht in Betrieb ist;
❖ Halten des Lüfters in einem Nichtbetriebszustand und Wiederholen der Schritte des Vergleichs der Temperatur der äußeren Umgebung und der Temperatur des Fachs mit den Werten, die die Steuereinheit liefert, wenn die Haltezeitspanne des Lüfters gleich einer dritten Zeitspanne ist oder darunter liegt;
❖ Betreiben des Lüfters und Wiederholen der Schritte des Vergleichs der Temperatur der äußeren Umgebung und der Temperatur des Fachs mit den Werten, die die Steuereinheit liefert, wenn die Haltezeitspanne des Lüfters über der dritten Zeitspanne liegt;
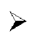 Steuern der Betriebsdauer des Lüfters, wenn der Lüfter in Betrieb ist;
❖ Halten des Lüfters in einem Betriebszustand und Wiederholen der Schritte des Vergleichs der Temperatur der äußeren Umgebung und der Temperatur des Fachs mit den Werten, die die Steuereinheit liefert, wenn die Betriebsdauer des Lüfters gleich der dritten Zeitspanne ist oder unter dieser liegt;
❖ Anhalten des Lüfters und Wiederholen der Schritte des Vergleichs der Temperatur der äußeren Umgebung und der Temperatur des Fachs mit den Werten, die die Steuereinheit liefert, wenn die Betriebsdauer des Lüfters über der dritten Zeitspanne liegt;
∘ Wiederholen der Schritte des Vergleichs der Temperatur der äußeren Umgebung und der Temperatur des Fachs mit den Werten, die die Steuereinheit liefert, wenn die seit dem Beginn des Betriebs des Kompressors verstrichene Zeit über der vierten Zeitspanne liegt.

2. Betriebsverfahren nach Anspruch 1, **dadurch gekennzeichnet, dass** der erste Wert 5°C beträgt.

3. Betriebsverfahren nach Anspruch 1, **dadurch gekennzeichnet, dass** der zweite Wert 32°C beträgt.

4. Betriebsverfahren nach Anspruch 1, **dadurch gekennzeichnet, dass** der dritte Wert 38°C beträgt.

5. Betriebsverfahren nach Anspruch 1, **dadurch gekennzeichnet, dass** die erste Zeitspanne 20 Minuten beträgt.

6. Betriebsverfahren nach Anspruch 1, **dadurch gekennzeichnet, dass** die zweite Zeitspanne 40 Minuten beträgt.

7. Betriebsverfahren nach Anspruch 1, **dadurch gekennzeichnet, dass** die dritte Zeitspanne 5 Minuten beträgt.

8. Betriebsverfahren nach Anspruch 1, **dadurch gekennzeichnet, dass** die vierte Zeitspanne 80 Minuten beträgt.

9. Betriebsverfahren nach Anspruch 1, **dadurch gekennzeichnet, dass** vor dem Schritt des Vergleichs der Temperatur der äußeren Umgebung und der Temperatur des Fachs mit den Werten, die die Steuereinheit liefert, oder vor dem Schritt des Messens der Temperatur der äußeren Umgebung und der Temperatur des Fachs, um diese der Steuereinheit zu übermitteln, das Betriebsverfahren folgende Schritte umfasst: Vergleichen der Anzahl der Einschaltungen der Kühlvorrichtung mit einem bestimmten Wert; Betreiben der Kühlvorrichtung gemäß dem Standardbetriebsalgorithmus, wenn die Anzahl der Einschaltungen unter dem bestimmten Wert ist; wenn die Anzahl der Einschaltungen gleich dem bestimmten Wert ist oder über diesem liegt, Übergehen zu den Schritten des Vergleichs der Temperatur des Fachs mit den Werten, die die Steuereinheit liefert, oder zu dem Schritt des Messens der Temperatur der äußeren Umgebung und der Temperatur des Fachs, um diese der Steuereinheit zu übermitteln.

10. Betriebsverfahren nach Anspruch 9, **dadurch gekennzeichnet, dass** der Wert, mit dem die Anzahl der Einschaltungen verglichen wird, 4 beträgt.

## Revendications

1. Procédé de fonctionnement convenant à un usage dans un dispositif de refroidissement, qui comprend au moins un compartiment, au moins un ensemble de cycles de refroidissement comprenant au moins un compresseur et au moins un évaporateur, et le refroidissement dudit compartiment ; au moins un ventilateur qui augmente l'échange de chaleur entre l'évaporateur et le compartiment et augmente la circulation d'air au sein du compartiment, lorsqu'il fonctionne ; au moins un premier capteur de température pour mesurer la température dudit compartiment ; au moins un second capteur de température pour mesurer la température d'un environnement externe dans lequel le dispositif de refroidissement est présent ; et au moins une unité de commande qui est connectée au compresseur, au ventilateur, au premier capteur de température et au second capteur de température, et qui comprend un algorithme de fonctionnement par défaut dans lequel les conditions de fonctionnement/hors fonctionnement du compresseur et du ventilateur sont définies pour le cycle de refroidissement à effectuer dans le dispositif de refroidissement en fonction des valeurs de températures mesurées, le procédé de fonctionnement comprenant les étapes consistant à :
• transmettre de l'énergie au compresseur lors de l'excitation du dispositif de refroidissement ;
• mesurer une température du compartiment par une première période et la transmettre à l'unité de commande par le premier capteur de température lors de l'excitation du dispositif de refroidissement ;
• mesurer une température de l'environnement externe par une deuxième période, qui est identique à la première période ou différente de la première période, et la transmettre à l'unité de commande par le second capteur de température lors de l'excitation du dispositif de refroidissement ;
• comparer, par l'unité de commande, la température mesurée du compartiment à une première valeur et la température mesurée de l'environnement externe à une deuxième valeur différente de la première valeur ;
• faire fonctionner le dispositif de refroidissement selon ledit algorithme de fonctionnement par défaut si la température du compartiment est inférieure à la première valeur ou que la température de l'environnement externe est inférieure à la deuxième valeur par suite de la comparaison effectuée ;
et **caractérisé en ce qu'**il comprend les étapes consistant à :
• comparer la température de l'environnement externe à une troisième valeur qui se situe au-dessus de la deuxième valeur si la température de l'environnement externe est égale ou supérieure à la deuxième valeur par suite de la comparaison effectuée ;
• commander l'état de fonctionnement du compresseur si la température de l'environnement externe est inférieure ou égale à la troisième valeur et que la température du compartiment est égale ou supérieure à la première valeur ;
- répéter les étapes de comparaison de la température de l'environnement externe et de la température du compartiment si le compresseur est hors fonctionnement ;
- commander le temps écoulé en partant du fonctionnement du compresseur si le compresseur fonctionne ;
o ne pas faire fonctionner le ventilateur et répéter les étapes de comparaison de la température de l'environnement externe et de la température du compartiment auxdites valeurs fournies dans l'unité de commande si la période de fonctionnement du compresseur est égale ou inférieure à une première période ;
∘ commander l'état de fonctionnement du ventilateur si la période de fonctionnement du compresseur est supérieure à la première période mais est égale ou inférieure à une deuxième période présentant une valeur qui est supérieure à la première période ;
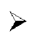 commander la période d'arrêt du ventilateur si le ventilateur ne fonctionne pas ;
❖ maintenir le ventilateur dans un état hors fonctionnement et répéter les étapes de comparaison de la température de l'environnement externe et de la température du compartiment auxdites valeurs fournies dans l'unité de commande si la période d'arrêt du ventilateur est égale ou inférieure à une troisième période ;
❖ faire fonctionner le ventilateur et répéter les étapes de comparaison de la température de l'environnement externe et de la température du compartiment auxdites valeurs fournies dans l'unité de commande si la période d'arrêt du ventilateur est supérieure à la troisième période ;
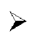 commander la période de fonctionnement du ventilateur si le ventilateur fonctionne ;
❖ maintenir le ventilateur dans un état de fonctionnement et répéter les étapes de comparaison de la température de l'environnement externe et de la température du compartiment auxdites valeurs fournies dans l'unité de commande si la période de fonctionnement du ventilateur est égale ou inférieure à la troisième période ;
❖ arrêter le ventilateur et répéter les étapes de comparaison de la température de l'environnement externe et de la température du compartiment auxdites valeurs fournies dans l'unité de commande si la période de fonctionnement du ventilateur est supérieure à la troisième période ;
∘ faire fonctionner le dispositif de refroidissement selon ledit algorithme de fonctionnement par défaut si la période de fonctionnement du compresseur se situe au-dessus de la deuxième période ;
• commander l'état de fonctionnement du compresseur si la température de l'environnement externe est supérieure à la troisième valeur et que la température du compartiment est égale ou supérieure à la première valeur ;
- répéter les étapes de comparaison de la température de l'environnement externe et de la température du compartiment si le compresseur ne fonctionne pas ;
- commander le temps écoulé en partant du fonctionnement du compresseur si le compresseur fonctionne ;
∘ ne pas faire fonctionner le ventilateur et répéter les étapes de comparaison de la température de l'environnement externe et de la température du compartiment auxdites valeurs fournies dans l'unité de commande si le temps écoulé en partant du fonctionnement du compresseur est égal ou inférieur à la deuxième période ;
∘ commander l'état de fonctionnement du ventilateur si le temps écoulé en partant du fonctionnement du compresseur est supérieur à la deuxième période mais est égal ou inférieur à une quatrième période ;
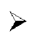 commander la période d'arrêt du ventilateur si le ventilateur ne fonctionne pas ;
❖ maintenir le ventilateur dans un état hors fonctionnement et répéter les étapes de comparaison de la température de l'environnement externe et de la température du compartiment auxdites valeurs fournies dans l'unité de commande si la période d'arrêt du ventilateur est égale ou inférieure à une troisième période ;
❖ faire fonctionner le ventilateur et répéter les étapes de comparaison de la température de l'environnement externe et de la température du compartiment auxdites valeurs fournies dans l'unité de commande si la période d'arrêt du ventilateur est supérieure à la troisième période ;
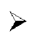 commander la période de fonctionnement du ventilateur si le ventilateur fonctionne ;
❖ maintenir le ventilateur dans un état de fonctionnement et répéter les étapes de comparaison de la température de l'environnement externe et de la température du compartiment auxdites valeurs fournies dans l'unité de commande si la période de fonctionnement du ventilateur est égale ou inférieure à la troisième période ;
❖ arrêter le ventilateur et répéter les étapes de comparaison de la température de l'environnement externe et de la température du compartiment auxdites valeur fournies dans l'unité de commande si la période de fonctionnement du ventilateur se situe au-dessus de la troisième période ;
∘ répéter les étapes de comparaison de la température de l'environnement externe et de la température du compartiment auxdites valeurs fournies dans l'unité de commande si le temps écoulé en partant du fonctionnement du compresseur se situe au-dessus de la quatrième période.

2. Procédé de fonctionnement selon la revendication 1, **caractérisé en ce que** la première valeur est de 5 °C.

3. Procédé de fonctionnement selon la revendication 1, **caractérisé en ce que** la deuxième valeur est de 32 °C.

4. Procédé de fonctionnement selon la revendication 1, **caractérisé en ce que** la troisième valeur est de 38 °C.

5. Procédé de fonctionnement selon la revendication 1, **caractérisé en ce que** la première période est de 20 minutes.

6. Procédé de fonctionnement selon la revendication 1, **caractérisé en ce que** la deuxième période est de 40 minutes.

7. Procédé de fonctionnement selon la revendication 1, **caractérisé en ce que** la troisième période est de 5 minutes.

8. Procédé de fonctionnement selon la revendication 1, **caractérisé en ce que** la quatrième période est de 80 minutes.

9. Procédé de fonctionnement selon la revendication 1, **caractérisé en ce que**, avant l'étape de comparaison de la température de l'environnement externe et de la température du compartiment auxdites valeurs fournies dans l'unité de commande ou avant l'étape de mesure de la température de l'environnement externe et de la température du compartiment de manière à les transmettre à l'unité de commande, le procédé de fonctionnement comprend les étapes consistant à comparer le nombre d'excitations du dispositif de refroidissement à une certaine valeur; à faire fonctionner le dispositif de refroidissement selon ledit algorithme de fonctionnement par défaut si le nombre d'excitations est inférieur à la certaine valeur; si le nombre d'excitations est égal ou supérieur à la certaine valeur, procéder aux étapes de comparaison de la température du compartiment auxdites valeurs fournies dans l'unité de commande ou à l'étape de mesure de la température de l'environnement externe et de la température du compartiment de manière à les transmettre à l'unité de commande.

10. Procédé de fonctionnement selon la revendication 9, **caractérisé en ce que** la valeur à laquelle le nombre d'excitations est comparé est de 4.
